# FASCICULE DE BREVET EUROPEEN

(11) **EP 1 223 455 B1**
(45) Date de publication et mention de la délivrance du brevet: **05.10.2005**
(21) Numéro de dépôt: 01403172.8
(22) Date de dépôt: 07.12.2001
(51) Int. Cl.: G02B 27/01

(54) **Viseur tête haute apte à s'adapter à des équipements d'un type donné**
An vorgegebene Ausrüstungsgegenstände anpassbare Head-up-Anzeige
Head up display able to be adapted to given types of equipment

(30) Priorité: 19.12.2000 FR 0016588
(43) Date de publication de la demande: 17.07.2002
(73) Titulaire: Thales, 75008 Paris (FR)
(72) Inventeur: Bignolles, Laurent, c/o Thales, Intellect Prop, 94117 Arcueil, Cedex (FR); Darrieux, Jean-Marc, c/o Thales, Int. Prop, 94117 Arcueil, Cedex (FR); Chevreau, Yannick, c/o Thales, Intellect Prop., 94117 Arcueil, Cedex (FR)
(74) Mandataire: Chaverneff, Vladimir

(56) Documents cités:
- EP-A- 0 007 039
- WO-A-98/20380
- FR-A- 2 732 479
- US-A- 4 749 256
- US-A- 5 007 711
- US-A- 5 940 218
- US-A- 6 046 867
- MARTIN GREEN: "Brighter Cockpit Display : Controlling Reflection in Cockpit Displays" ELECTRO OPTICS, vol. 15, no. 7, juillet 1983 (1983-07), pages 37-41, XP002198546 Chicago, Illinois, USA

## Description

L'invention concerne un viseur tête haute apte à s'adapter à des équipements d'un type donné, par exemple de type aéronef, véhicule terrestre ou casque ainsi qu'un procédé de fabrication d'un ensemble de viseurs tête haute adaptés à de tels équipements.

Le viseur tête haute est un dispositif optomécanique qui permet de superposer au paysage extérieur vu par le pilote de l'aéronef ou du véhicule, ou le porteur du casque (dans la suite également dénommé « pilote » par souci de simplicité), une symbologie qui est projetée à l'infini, c'est-à-dire suffisamment loin pour que le pilote n'aie pas à accommoder substantiellement pour voir la symbologie. La symbologie est émise par une source d'images généralement monochromatique et comporte par exemple des images synthétiques et des réticules ou des images provenant de capteurs infrarouges et permettant de voir le paysage même par une nuit particulièrement sombre.

Classiquement, le viseur tête haute (ou HUD, abréviation de l'expression anglo-saxonne Head Up Display) comprend un élément optique appelé combineur, qui permet de superposer le paysage extérieur et la symbologie projetée à l'infini par une optique de projection. Le combineur peut être par exemple une lame plane inclinée, revêtue d'un traitement réfléchissant à la longueur d'onde de la source d'image émettant la symbologie et transparent dans le visible aux autres longueurs d'onde afin de transmettre le maximum de flux émis par le paysage extérieur. Cependant, dans le cas où le champ de vue nécessaire pour voir la symbologie est important (par exemple dans le cas de la vision nocturne), il est préférable d'utiliser un combineur « convergent », c'est-à-dire se comportant à la longueur d'onde de la source d'image comme un miroir convergent, par exemple un miroir sphérique, afin de diminuer la taille des éléments optiques formant l'optique de projection. L'optique de projection, alors appelée optique relais, forme dans ce cas une image intermédiaire de la symbologie, projetée à l'infini par le combineur. L'utilisation d'un combineur convergent est d'autant plus nécessaire que la distance optique est grande entre l'oeil du pilote et l'optique relais, ce qui est le cas, par exemple, dans les avions de transport.

Mais l'utilisation d'un combineur convergent hors axe, c'est à dire présentant un angle d'inclinaison non nul avec l'axe central d'observation du pilote, entraîne nécessairement l'apparition d'aberrations d'excentrement qu'il est nécessaire de corriger pour fournir au pilote une qualité d'image satisfaisante. Ces aberrations peuvent être corrigées par le choix des éléments optiques de l'optique relais, et/ou par le dimensionnement d'un combineur spécifique (par exemple, combineur asphérique). En général, la correction des aberrations d'excentrement nécessite l'utilisation d'éléments optiques spécifiques dans l'optique relais, par exemple des lentilles cylindriques, asphériques, des prismes ou autres éléments qui ne sont pas de révolution.

Comme les aberrations d'excentrement dépendent de l'angle d'inclinaison du combineur, il est nécessaire pour chaque installation d'un viseur tête haute dans deux équipements ou plus de type donné, par exemple de type aéronef, véhicule terrestre, ou casque, de redimensionner une architecture optique qui permette de fournir un niveau de correction acceptable. Ainsi, pour des avions de différents modèles par exemple, lorsque les contraintes d'encombrement dans la cabine de pilotage ne sont pas les mêmes, les contraintes de positionnement sur l'optique relais par rapport à la tête du pilote sont différentes. Cela nécessite alors pour chaque modèle d'avion un redimensionnement de l'architecture optique pour adapter l'angle d'inclinaison du combineur et la correction des aberrations d'excentrement liées à la valeur de l'angle d'inclinaison. En final, les coûts de développement sont de ce fait très importants.

Le document FR-A-2 732 479 divulgue un dispositif de visualisation tête haute comprenant une optique relais portable.

Pour pallier ces inconvénients, l'invention présente un viseur tête haute apte à s'adapter à un ensemble d'équipements d'un type donné, avec une optique relais modulaire comprenant un premier module avec au moins un élément optique, fixe quel que soit l'équipement, et un second module, avec au moins un élément optique dont la position est prédéfinie en fonction de la position angulaire du combineur ainsi que des moyens de déplacement du second module par rapport au premier module. Plus précisément, l'invention concerne un viseur tête haute tel que défini par la revendication 1.

L'invention présente en outre un procédé de fabrication d'un ensemble de viseurs tête haute adaptés à des équipements de type donné, tel que défini par la revendication 8, qui permet de réaliser des viseurs adaptés à des équipements présentant différentes configurations d'installations sans nécessiter de redévelopper pour chaque équipement une nouvelle architecture optique et tout en gardant le même niveau de correction des aberrations d'excentrement.

D'autres avantages et caractéristiques de l'invention apparaîtront plus clairement à la lecture de la description qui suit, illustrée par les figures indexées qui représentent :
- Les figures 1A et 1B, des schémas illustrant des exemples d'installation d'un viseur tête haute dans un avion ;
- La figure 2, un schéma illustrant un exemple de réalisation d'un combineur convergent;
- La figure 3, un schéma illustrant un mode de réalisation de viseur tête haute modulaire selon l'invention ;
- Les figures 4A et 4B, le tracé de rayons dans un exemple de viseur modulaire selon l'invention pour deux angles d'inclinaison du combineur.

Dans ces figures, les éléments identiques sont indexés par les mêmes repères.

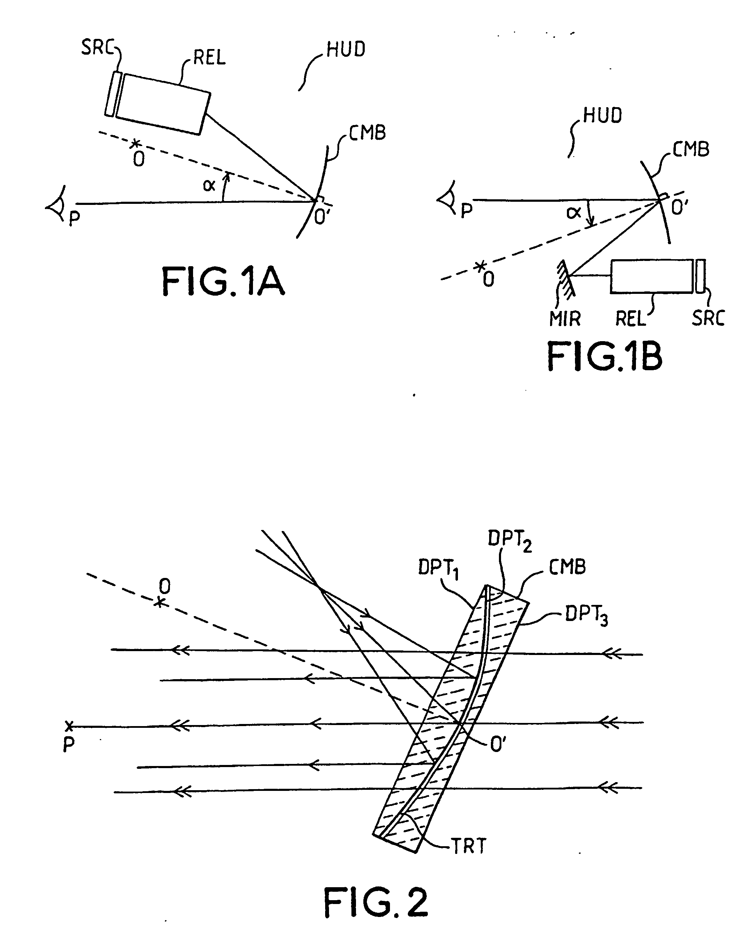

Les figures 1A et 1B illustrent par des schémas deux exemples d'installation d'un viseur tête haute HUD, par exemple dans un avion de transport, pour aider un pilote dans les phases délicates du vol par exemple. Le viseur HUD comprend une source d'images SRC, une optique relais REL, un combineur convergent CMB. La source SRC émet dans une bande spectrale donnée, généralement autour d'une longueur d'onde prédéterminée, une symbologie comportant par exemple des images synthétiques, des réticules, ou des images provenant de capteurs infrarouges. La source d'images est par exemple constituée d'un tube à rayons cathodiques, émettant dans le vert, ou d'un imageur à cristaux liquides. L'optique relais REL est formée d'une combinaison d'éléments optiques et forme de la symbologie une image intermédiaire qui est projetée à l'infini, vers le pilote, par le combineur convergent CMB. Le combineur CMB est un composant optique qui permet de superposer la symbologie projetée à l'infini au paysage extérieur observé par le pilote et qui se comporte, dans la bande spectrale de la source d'images, comme un miroir convergent permettant de projeter à l'infini l'image intermédiaire formée par l'optique relais. Il est sensiblement transparent dans le visible aux autres longueurs d'onde afin de transmettre le maximum de flux émis par le paysage extérieur. Pour répondre aux contraintes d'encombrement de l'optique relais, le combineur travaille nécessairement hors axe, c'est à dire avec un angle d'inclinaison α non nul avec l'axe central PO' d'observation du pilote (défini comme l'axe de visée au centre du champ d'observation du pilote). Plus précisément, l'angle d'inclinaison α est défini comme l'angle entre l'axe central PO' et l'axe normal OO' défini comme l'axe normal à la surface tangente au miroir convergent équivalent formé par le combineur au point d'intersection O' de l'axe central PO' avec ledit miroir équivalent. La figure 1A illustre un exemple d'installation dans lequel l'optique relais est positionnée au-dessus de la tête du pilote, tandis que dans l'exemple de la figure 1 B, l'optique relais est positionnée devant le pilote.

Comme cela apparaît sur la figure 2, le combineur convergent CMB est par exemple formé de trois dioptres dont un premier dioptre plan DPT₁, un second dioptre courbe DPT₂, et un troisième dioptre plan DPT₃ parallèle au premier dioptre DPT₁, les indices de réfraction des milieux entre le premier et le second dioptre et entre le second et le troisième dioptre étant sensiblement identiques. Le second dioptre est revêtu d'un traitement TRT sensiblement réfléchissant dans la bande spectrale de la source d'image et sensiblement transparent dans le visible, en dehors de ladite bande spectrale. Ainsi, le combineur se comporte comme un miroir convergent pour le flux lumineux (indiqué par une flèche simple) issu de la source d'image et comme une lame à faces planes et parallèles pour le flux lumineux (indiqué par une flèche double) issu du paysage, en dehors de la bande spectrale de la source d'images. Le dioptre DPT₂ est par exemple sphérique, le combineur se comportant alors comme un miroir sphérique. Sur la figure 2 sont également représentés l'axe central d'observation PO' et l'axe normal OO' qui, dans le cas d'un dioptre DPT₂ sphérique, est confondu avec un rayon de ladite sphère. Le traitement TRT est par exemple un traitement holographique adapté à la longueur d'onde de la source d'images SRC. Selon une variante, le combineur CMB peut également être formé d'une lame à faces planes et parallèles revêtue d'un traitement holographique qui assure à la fois la fonction de réflexion/transmission sélective et la fonction de phase.

Dans le cas d'un viseur de casque, c'est la visière du casque elle-même qui assure la fonction de combineur. Elle est alors recouverte par un traitement semi-réfléchissant adapté. Sa faible épaisseur suffit pour limiter la distorsion du paysage extérieur observé.

Dans la suite, on confondra le combineur convergent CMB avec le miroir convergent dont il est équivalent.

L'utilisation d'un combineur convergent hors axe, tel qu'il est illustré par exemple sur les figures 1A, 1B ou 2 entraîne l'apparition d'aberrations d'excentrement qui doivent être corrigées pour fournir au pilote une bonne qualité d'images. La correction peut se faire par le choix des éléments optiques de l'optique relais REL. Elle peut se faire également dans le cas de l'utilisation d'un combineur réalisé sous la forme d'un composant holographique, en calculant une fonction de phase qui compense partiellement ces aberrations.

En fonction de l'angle d'inclinaison du combineur hors axe, les aberrations d'excentrement varient et les caractéristiques de l'optique relais et/ou du combineur doivent être redéfinies pour assurer une bonne qualité d'image au pilote.

L'invention propose un viseur tête haute apte à s'adapter à un ensemble d'équipements d'un type donné, par exemple de type aéronef, véhicule terrestre ou casque. Selon l'invention, on caractérise un type d'équipement notamment par une plage angulaire dans laquelle doit être réglé l'angle d'inclinaison du combineur pour répondre aux contraintes d'encombrement de chaque équipement du type donné. Dans le cas d'aéronefs par exemple, on définit un type d'équipements caractérisé par une plage angulaire de réglage du combineur allant de 10° à 30°, ce qui permet de couvrir un grand nombre de type d'avions civils ou militaires aux contraintes d'encombrement différentes. Dans le cas de casques, une plage angulaire allant de 20° à 40° est plus adaptée pour caractériser ce type d'équipements.

Selon l'invention, le combineur forme dans la bande spectrale de la source d'images un miroir convergent hors axe dont l'angle d'inclinaison α est réglé, pour un équipement donné, en fonction de la position de la source d'images dans ledit équipement, et dans une plage angulaire donnée dépendant du type d'équipement. En outre dans le mode de réalisation principal de l'invention, l'optique relais est modulaire, comprenant un premier module avec au moins un élément optique, fixe quel que soit l'équipement, et un second module, avec au moins un élément optique dont la position est prédéfinie en fonction de la position angulaire du combineur.

L'invention propose en outre un procédé de fabrication d'un ensemble de viseurs tête haute adaptés à des équipements de type donné, par exemple de type aéronef, véhicule terrestre, ou casque. Le procédé selon l'invention comprend, lors de la fabrication d'un viseur adapté à un équipement donné, le réglage de l'angle d'inclinaison α du combineur CMB, en fonction de la position de la source d'images SRC dans ledit équipement, l'angle d'inclinaison variant dans une plage angulaire dépendant du type d'équipement. II comprend en outre, selon un autre mode de réalisation principal de l'invention la compensation des variations d'aberrations induites par le réglage angulaire du combineur, par le déplacement d'un ou de plusieurs des éléments de l'optique relais, d'une valeur prédéfinie en fonction de l'angle d'inclinaison du combineur, au moins un desdits autres éléments de l'optique relais restant fixe.

Ainsi, lors de la fabrication de viseurs adaptés à des équipements de type donné, le même combineur est utilisé, agencé selon un angle d'inclinaison adapté, et les variations d'aberrations induites par le nouvel angle d'inclinaison du combineur sont corrigées en déplaçant selon une valeur prédéfinie un ou plusieurs éléments de l'optique relais, sans avoir ni à redéfinir l'architecture de l'optique relais, ni à recalculer un combineur adapté. Les éléments de l'optique relais sont identiques d'un viseur à l'autre; mais un ou plusieurs de ces éléments sont agencés différemment dans la combinaison optique pour compenser les variations d'aberration. Ainsi, les viseurs selon l'invention sont modulaires, présentant des éléments optiques identiques mais dont certains sont agencés différemment.

Selon l'invention, le réglage angulaire du combineur peut être discret, l'angle d'inclinaison pouvant prendre deux valeurs ou plus. Dans ce cas, le déplacement du ou des éléments de l'optique relais est réalisé par exemple au moyen de pieds permettant de caler chacun desdits éléments dans une position dépendant de la position angulaire du combineur, cette position étant prédéfinie. Le déplacement d'un élément de l'optique relais peut également être effectué en remplaçant le support mécanique qui contient cet élément par un support mécanique dont l'interface assure la mise en place dans la nouvelle position.

II est également possible de prévoir un positionnement sensiblement continu du ou des éléments de l'optique relais à déplacer, en fonction de l'angle d'inclinaison du combineur. Un système de réglage doit alors être prévu pour les mettre en place à la bonne position pour chaque nouvel angle du combineur. Ce réglage s'effectue par exemple sur un banc en recherchant à optimiser la qualité d'image.

Avantageusement, selon l'invention, les variations d'aberrations induites par le réglage angulaire du combineur sont compensées par le déplacement d'un seul élément de l'optique relais, ce déplacement consistant par exemple en une rotation autour de son axe et/ou une translation par rapport à l'élément optique adjacent. La déposante a montré que cet élément peut être avantageusement constitué du premier élément optique de l'optique relais traversé par le flux lumineux issu de la source d'images. C'est en effet en déplaçant cet élément qu'il semble que la correction des aberrations soit la plus efficace. Dans ce cas, cet élément est solidaire de la source d'images SRC, de telle sorte que lorsqu'il est déplacé pour compenser les variations d'aberrations induites par le réglage du combineur hors axe, la source d'image soit déplacée de la même façon afin de ne pas perturber la projection à l'infini de la symbologie émise par ladite source.

Nous décrivons maintenant des modes de réalisation et des examples de viseurs tête haute selon l'invention.

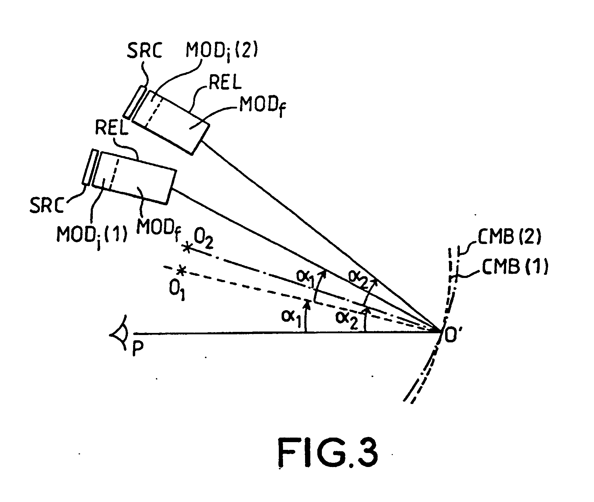

La figure 3 représente un schéma illustrant un mode de réalisation de viseurs tête haute selon l'invention dans deux équipements de type aéronef. Pour chaque équipement est adapté un viseur avec un combineur convergent réglé respectivement dans une position notée CMB(1) et dans une position notée CMB(2), et correspondant respectivement à deux angles d'inclinaison α₁ et α₂, avec α₁ inférieur à α₂, définis par les angles entre l'axe central d'observation PO' et les axes O₁O' et O₂O' normaux respectivement au combineur dans les positions CMB(1) et CMB(2). La position CMB(1), en pointillé court sur la figure 3, correspond par exemple à l'installation du viseur tête haute dans un avion civil, dans lequel la contrainte d'encombrement concerne plus généralement le haut de l'avion, à cause des structures métalliques, tandis que la position CMB(2), en pointillé alterné long et court, correspond par exemple à l'installation du viseur tête haute dans un avion militaire, dans lequel il est nécessaire de disposer d'un encombrement important entre l'optique relais et la tête du pilote, pour pouvoir autoriser le port d'un casque.

Dans le mode de réalisation de la figure 3, les éléments de l'optique relais des viseurs peuvent être regroupés en deux modules. Un premier module, noté MODᵢ, est formé du premier élément optique de la combinaison traversé par le flux lumineux issu de la source d'images SRC et est solidaire de ladite source. Un second module, noté MOD_{f}, est formé des autres éléments de l'optique relais, ces éléments étant solidaires entre eux. Dans cet exemple, lors de la fabrication d'un viseur, l'angle d'inclinaison du combineur est réglé pour amener le combineur soit dans la position CMB(1), soit dans la position CMB(2). Le module MOD_{f} reste fixe dans la combinaison optique formant l'optique relais. Pour compenser les variations d'aberrations induites lorsqu'on change l'angle d'inclinaison du combineur, seul le module MODᵢ est déplacé dans cet exemple, passant de la position MODᵢ(1) à la position MODᵢ(2) pour le viseur dont le combineur est respectivement dans la position CMB(1) ou CMB(2). Ce déplacement consiste par exemple en une rotation de l'élément optique formant le module MODᵢ autour de son axe et en une translation par rapport à l'élément optique directement adjacent.

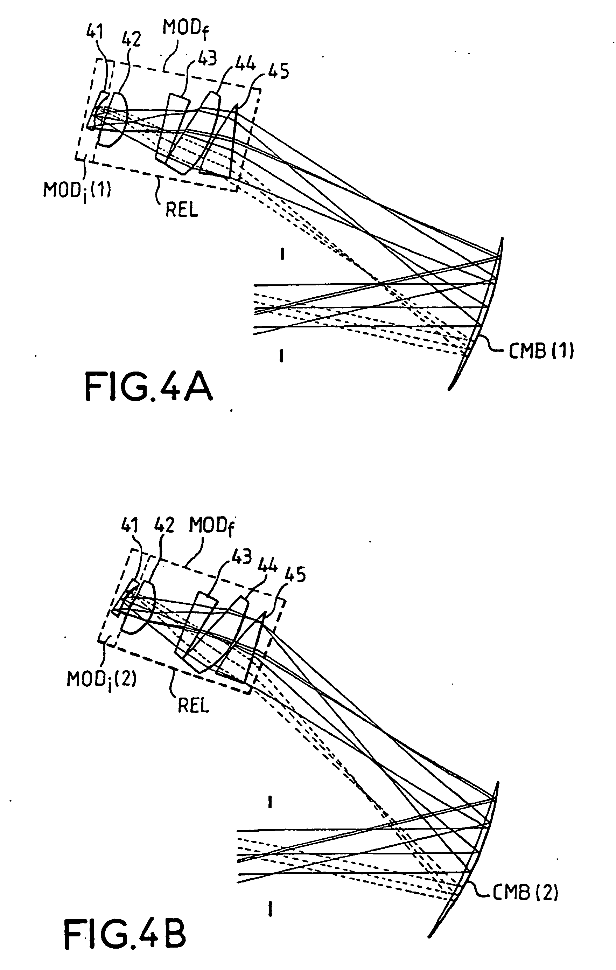

Les figures 4A et 4B illustrent selon un exemple le tracé de rayons respectivement dans deux viseurs tête haute obtenus avec le procédé selon l'invention et s'appliquant à un type d'aéronef caractérisé par une plage angulaire allant sensiblement de 10° à 30°, permettant par exemple d'obtenir des viseurs tête haute adaptés aussi bien à des avions civils et militaires. Dans cet exemple, le miroir équivalent du combineur CMB est sphérique. Dans le viseur illustré par l'exemple de la figure 4A, l'angle d'inclinaison du combineur dont la position est notée CMB(1) vaut environ 18°. Cette configuration correspond par exemple à un viseur tête haute adapté à un avion civil. Dans le viseur illustré par l'exemple de la figure 4B, l'angle d'inclinaison du combineur dont la position est notée CMB(2) vaut environ 24°. Cette configuration correspond par exemple à un viseur tête haute adapté à un avion militaire. L'optique relais REL est formée ici pour chaque viseur d'une combinaison de cinq éléments optiques, notés respectivement 41, 42, 43, 44, 45, regroupés comme dans l'exemple précédent en deux modules MODᵢ et MOD_{f}. Dans cet exemple, seul le module MODᵢ solidaire de la source d'images et constitué du premier élément optique 41 traversé par le flux lumineux issu de la source d'images (non représentée) est déplacé entre les deux viseurs pour compenser les variations d'aberration. L'autre module MOD_{f} composé des quatre autres éléments optiques 42, 43, 44, 45 garde la même position dans l'optique relais REL de chacun des deux viseurs. Dans cet exemple, les variations d'aberrations induites par la variation de l'angle d'inclinaison du combineur sont compensées en effectuant sur le module mobile MODᵢ solidaire de la source d'images un déplacement consistant par exemple en une rotation autour de son axe, une translation et un excentrement par rapport à l'élément optique adjacent 42.

L'invention propose ainsi un viseur tête haute apte à s'adapter à différentes installations nécessitant une variation de l'angle d'inclinaison du combineur convergent hors axe sans pour autant devoir développer pour chaque installation particulière une architecture optique spécifique. Les exemples d'application de viseurs tête haute modulaires selon l'invention ne sont pas limités aux exemples des figures 3, 4A et 4B. En particulier, l'invention trouvera des applications dans le domaine de l'automobile, ou pour les viseurs de casque dans lesquels l'angle d'inclinaison de la visière est susceptible de varier en fonction du modèle.

## Revendications

1. Viseur tête haute (HUD) apte à s'adapter à un ensemble d'équipements d'un type donné, comprenant un combineur (CMB), une source d'images (SRC) et une optique relais (REL) formée d'une combinaison d'éléments optiques formant d'une symbologie émise dans la bande spectrale donnée par ladite source d'images (SRC) une image intermédiaire, projetée à l'infini par ledit combineur, où
- le combineur forme dans ladite bande spectrale de ladite source d'images un miroir convergent hors axe dont l'angle d'inclinaison (α) est réglé, pour un équipement donné, en fonction de la position de la source d'images dans ledit équipement, et dans une plage angulaire donnée dépendant du type d'équipement,
- l'optique relais est modulaire, comprenant un premier module (MOD_{f}) avec au moins un élément optique, fixe quel que soit l'équipement, un second module (MODᵢ), avec au moins un élément optique dont la position est prédéfinie en fonction de la position angulaire du combineur
**caractérisé en ce que**
l'optique relais comprend en outre des moyens de déplacement du second module (MODᵢ) par rapport au premier module (MOD_{f}).

2. Viseur tête haute selon la revendication 1, où ledit second module comprend pour seul élément optique le premier élément optique traversé par le flux lumineux issu de la source d'images, cet élément étant solidaire de ladite source.

3. Viseur tête haute selon la revendication 2, où entre deux réglages de l'angle d'inclinaison du combineur, ledit premier élément prend deux positions distinctes l'une de l'autre par une rotation et/ou une translation par rapport à l'élément optique adjacent.

4. Viseur tête haute selon l'une des revendications précédentes, où l'optique relais comprend des pieds permettant de caler le ou lesdits élément(s) dudit second module dans une position dépendant du réglage de l'angle d'inclinaison du combineur.

5. Viseur tête haute apte à s'adapter à un ensemble d'équipements de type aéronefs civils et militaires selon l'une des revendications précédentes, où la source d'images est positionnée au-dessus du pilote, et en ce que l'angle d'inclinaison du combineur se situe dans une plage angulaire sensiblement comprise entre 10° et 30° en fonction de l'équipement.

6. Viseur tête haute selon la revendication 5, où l'optique relais est formée d'une combinaison de 4 à 6 éléments optiques, et en ce que ledit second module comprend pour seul élément optique le premier élément optique traversé par le flux lumineux issu de la source d'images, cet élément étant solidaire de ladite source.

7. Viseur tête haute apte à s'adapter à un ensemble d'équipements de type casques selon l'une des revendications 1 à 4, où la visière du casque forme le combineur, et en ce que l'angle d'inclinaison dudit combineur se situe dans une plage angulaire sensiblement comprise entre 20° et 40° en fonction de l'équipement.

8. Procédé de fabrication d'un ensemble de viseurs tête haute (HUD) adaptés à des équipements d'un type donné, comprenant une source d'images (SRC), un combineur (CMB) formant un miroir convergent hors axe, et une optique relais (REL) formée d'une combinaison d'éléments optiques formant d'une symbologie émise dans la bande spectrale donnée par ladite source d'images (SRC) une image intermédiaire, projetée à l'infini par ledit combineur, ladite optique relais étant modulaire, comprenant un premier module (MOD_{f}) avec au moins un élément optique, fixe quel que soit l'équipement, un second module (MODᵢ) et des moyens de déplacement du second module (MODᵢ), par rapport au premier module (MOD_{f}), où le procédé comprend, lors de la fabrication d'un viseur adapté à un équipement donné,
- le réglage de l'angle d'inclinaison (α) du combineur, en fonction de la position de la source d'images dans ledit équipement, et dans une plage angulaire dépendant du type d'équipement,
et **caracterisé en ce que** le procédé comprend:
- la compensation des variations d'aberrations induites par le réglage angulaire du combineur, par le déplacement d'au moins un élément du second module (MODᵢ) de l'optique relais, d'une valeur prédéfinie en fonction de l'angle d'inclinaison du combineur, au moins un desdits autres éléments du premier module (MOD_{f}) de l'optique relais restant fixe.

9. Procédé de fabrication selon la revendication 8, où la compensation des variations d'aberrations est obtenue par le seul déplacement du premier élément optique traversé par le flux lumineux issu de la source d'images, cet élément étant solidaire de ladite source.

10. Procédé de fabrication selon la revendication 9, où le déplacement dudit premier élément comprend une rotation et/ou une translation par rapport à l'élément optique adjacent.

11. Procédé de fabrication selon l'une des revendications 8 à 10, où le réglage angulaire du combineur étant discret, le déplacement du ou des éléments de l'optique relais est réalisé au moyen de pieds permettant de caler chacun du ou desdits éléments dans une position dépendant de la position angulaire du combineur.

12. Procédé de fabrication selon l'une des revendications 8 à 10, où le réglage angulaire du combineur pouvant se faire de façon sensiblement continue dans la plage angulaire, le déplacement du ou des éléments de l'optique relais est effectué de façon sensiblement continue en fonction de l'angle de réglage du combineur.

## Patentansprüche

1. Head-up-Display (HUD), das in der Lage ist, sich an eine Gruppe von Einrichtungen eines gegebenen Typs anzupassen, mit einem Combiner (CMB), einer Bildquelle (SRC) und einer aus einer Kombination von optischen Elementen gebildeten Relaisoptik (REL), die aus einer im gegebenen Spektralband von der Bildquelle (SRC) gesendeten Symbologie ein Zwischenbild formt, das vom Combiner ins Unendliche projiziert wird, wobei
- der Combiner im Spektralband der Bildquelle einen achsfern konvergierenden Spiegel bildet, dessen Neigungswinkel (α) für eine gegebene Einrichtung in Abhängigkeit von der Position der Bildquelle in der Einrichtung und in einem gegebenen Winkelbereich eingestellt wird, der von der Art der Einrichtung abhängt,
- die Relaisoptik modular ist und einen ersten Modul (MOD_{f}) mit mindestens einem optischen Element, der für alle Arten von Einrichtungen ortsfest ist, und einen zweiten Modul (MODᵢ) mit mindestens einem optischen Element aufweist, dessen Position in Abhängigkeit von der Winkelposition des Combiners vordefiniert ist,
**dadurch gekennzeichnet, dass** die Relaisoptik außerdem Mittel zur Verschiebung des zweiten Moduls (MODᵢ) bezüglich des ersten Moduls (MOD_{f}) aufweist.

2. Head-up-Display nach Anspruch 1, bei dem der zweite Modul als einziges optisches Element das erste optische Element enthält, das von dem von der Bildquelle stammenden Lichtstrom durchquert wird und fest mit der Quelle verbunden ist.

3. Head-up-Display nach Anspruch 2, bei dem zwischen zwei Einstellungen des Neigungswinkels des Combiners das erste Element durch eine Drehung und/oder eine Translationsbewegung bezüglich des benachbarten optischen Elements zwei voneinander verschiedene Positionen einnimmt.

4. Head-up-Display nach einem der vorhergehenden Ansprüche, bei dem die Relaisoptik Füße aufweist, die es ermöglichen, das Element oder die Elemente des zweiten Moduls in einer Position zu blockieren, die von der Einstellung des Neigungswinkels des Combiners abhängt.

5. Head-up-Display, das sich an eine Gruppe von Einrichtungen von der Art zivile und militärische Luftfahrzeuge nach einem der vorhergehenden Ansprüche anpassen kann, bei dem die Bildquelle oberhalb des Piloten angeordnet ist, und bei dem der Neigungswinkel des Combiners sich in einem Winkelbereich befindet, der je nach der Einrichtung im Wesentlichen zwischen 10° und 30° liegt.

6. Head-up-Display nach Anspruch 5, bei dem die Relaisoptik aus einer Kombination von 4 bis 6 optischen Elementen gebildet wird, und bei dem der zweite Modul als einziges optisches Element das erste optische Element aufweist, das von dem von der Bildquelle stammenden Lichtstrom durchquert wird und fest mit der Quelle verbunden ist.

7. Head-up-Display, das sich an eine Gruppe von Einrichtungen von der Art eines Helms nach einem der Ansprüche 1 bis 4 anpassen kann, bei dem das Visier des Helms den Combiner bildet, und bei dem der Neigungswinkel des Combiners sich in einem Winkelbereich befindet, der je nach der Einrichtung im Wesentlichen zwischen 20° und 40° liegt.

8. Verfahren zur Herstellung einer Gruppe von Head-up-Displays (HUD), die an Einrichtungen eines gegebenen Typs angepasst sind, mit einer Bildquelle (SRC), mit einem Combiner (CMB), der einen achsfern konvergierenden Spiegel bildet, und mit einer aus einer Kombination von optischen Elementen gebildeten Relaisoptik (REL), die aus einer Symbologie, die im gegebenen Spektralband von der Bildquelle (SRC) gesendet wird, ein Zwischenbild formt, das vom Combiner ins Unendliche projiziert wird, wobei die Relaisoptik modular ist und einen ersten Modul (MOD_{f}) mit mindestens einem optischen Element, der unabhängig von der Art der Einrichtung ortsfest ist, einen zweiten Modul (MODᵢ) und Mittel zur Verschiebung des zweiten Moduls (MODᵢ) bezüglich des ersten Moduls (MOD_{f}) aufweist, wobei das Verfahren bei der Herstellung eines an eine gegebene Einrichtung angepassten Sichtgeräts aufweist:
- die Einstellung des Neigungswinkels (α) des Combiners in Abhängigkeit von der Position der Bildquelle in der Einrichtung und in einem Winkelbereich, der vom Typ der Einrichtung abhängt,
und **dadurch gekennzeichnet, dass** das Verfahren aufweist:
- die Kompensation der Variationen von Aberrationen, die durch die Winkeleinstellung des Combiners hervorgerufen werden, durch die Verschiebung mindestens eines Elements des zweiten Moduls (MODᵢ) der Relaisoptik um einen in Abhängigkeit vom Neigungswinkel des Combiners vordefinierten Wert, wobei mindestens eines der anderen Elemente des ersten Moduls (MOD_{f}) der Relaisoptik ortsfest bleibt.

9. Herstellungsverfahren nach Anspruch 8, bei dem die Kompensation der Aberrationsvariationen nur durch die Verschiebung des ersten optischen Elements erhalten wird, das von dem von der Bildquelle stammenden Lichtstrom durchquert wird und fest mit der Quelle verbunden ist.

10. Herstellungsverfahren nach Anspruch 9, bei dem die Verschiebung des ersten Elements eine Drehung und/oder eine Translationsbewegung bezüglich des benachbarten optischen Elements enthält.

11. Herstellungsverfahren nach einem der Ansprüche 8 bis 10, bei dem die Winkeleinstellung des Combiners diskret erfolgt, und die Verschiebung des Elements oder der Elemente der Relaisoptik mit Hilfe von Füßen erfolgt, die es ermöglichen, jedes Element oder jedes der Elemente in einer Position zu blockieren, die von der Winkelposition des Combiners abhängt.

12. Herstellungsverfahren nach einem der Ansprüche 8 bis 10, bei dem die Winkeleinstellung des Combiners im Winkelbereich im Wesentlichen kontinuierlich erfolgen kann, wobei die Verschiebung des Elements oder der Elemente der Relaisoptik in Abhängigkeit vom Einstellwinkel des Combiners im Wesentlichen kontinuierlich erfolgt.

## Claims

1. Head up display (HUD) able to adapt to a set of equipment of a given type, comprising a combiner (CMB), an image source (SRC) and a relay optic (REL) formed from a combination of optical elements forming from a symbology emitted in the spectral band given by the the said image source (SRC) an intermediate image, projected to infinity by the the said combiner, where
- the combiner forms in the said spectral band of the the said image source an off-axis convergent mirror whose angle of inclination (α) is adjusted, for a given item of equipment, as a function of the position of the image source in the the said item of equipment, and in a given angular span dependent on the type of equipment,
- the relay optic is modular, comprising a first module (MOD_{f}) with at least one optical element, fixed regardless of the item of equipment, a second module (MODᵢ) with at least one optical element whose position is predefined as a function of the angular position of the combiner
**characterized in that** the relay optic furthermore comprises means of displacement of the second module (MODᵢ) with respect to the first module (MOD_{f}).

2. Head up display according to Claim 1, where the the said second module comprises as sole optical element the first optical element traversed by the luminous flux issuing from the image source, this element being integral with the the said source.

3. Head up display according to Claim 2, where between two adjustments of the angle of inclination of the combiner, the the said first element takes two positions that are mutually distinct through a rotation and/or a translation with respect to the adjacent optical element.

4. Head up display according to one of the preceding claims, where the relay optic comprises feet making it possible to lock the the said element or elements of the the said second module in a position dependent on the adjustment of the angle of inclination of the combiner.

5. Head up display able to adapt to a set of equipment of civil and military aircraft type according to one of the preceding claims, where the image source is positioned above the pilot, and in that the angle of inclination of the combiner is situated in an angular span substantially lying between 10° and 30° as a function of the item of equipment.

6. Head up display according to Claim 5, where the relay optic is formed of a combination of 4 to 6 optical elements, and in that the the said second module comprises as sole optical element the first optical element traversed by the luminous flux issuing from the image source, this element being integral with the the said source.

7. Head up display able to adapt to a set of equipment of helmet type according to one of claims 1 to 4, where the display of the helmet forms the combiner, and in that the angle of inclination of the the said combiner is situated in an angular span substantially lying between 20° and 40° as a function of the item of equipment.

8. Method of manufacturing a set of head up displays (HUD) adapted to equipment of a given type, comprising an image source (SRC), a combiner (CMB) forming an off-axis convergent mirror, and a relay optic (REL) formed from a combination of optical elements forming from a symbology emitted in the given spectral band by the the said image source (SCR) an intermediate image, projected to infinity by the the said combiner, the the said relay optic being modular, comprising a first module (MOD_{f}) with at least one optical element, fixed regardless of the item of equipment, a second module (MODᵢ) and means of displacement of the second module (MODᵢ) with respect to the first module (MOD_{f}), where the method comprises, during the manufacture of a display adapted to a given item of equipment,
- the adjustment of the angle of inclination (α) of the combiner, as a function of the position of the image source in the said item of equipment, and in an angular span dependent on the type of equipment, and **characterized in that** the method comprises:
- the compensation for the variations of aberrations induced by the angular adjustment of the combiner, by the displacement of at least one element of the second module (MODᵢ) of the relay optic, by a value predefined as a function of the angle of inclination of the combiner, at least one of the the said other elements of the first module (MOD_{f}) of the relay optic remaining fixed.

9. Method of manufacture according to Claim 8, where the compensation for the variations of aberrations is obtained solely by the displacement of the first optical element traversed by the luminous flux issuing from the image source, this element being integral with the the said source.

10. Method of manufacture according to Claim 9, where the displacement of the the said first element comprises a rotation and/or a translation with respect to the adjacent optical element.

11. Method of manufacture according to one of Claims 8 to 10, where the angular adjustment of the combiner being discrete, the displacement of the element or elements of the relay optic is carried out by means of feet making it possible to lock each of the the said element or elements in a position dependent on the angular position of the combiner.

12. Method of manufacture according to one of Claims 8 to 10 where, it being possible for the angular adjustment of the combiner to be done in a substantially continuous manner in the angular span, the displacement of the element or elements of the relay optic is performed in a substantially continuous manner as a function of the angle of adjustment of the combiner.
